# EUROPEAN PATENT APPLICATION

(11) **EP 3 413 193 A1**
(43) Date of publication of application: **12.12.2018**
(21) Application number: 17746804.8
(22) Date of filing: 20.01.2017
(51) Int. Cl.: G06F 9/445

(54) **VIRTUAL MACHINE DEPLOYMENT METHOD AND APPARATUS**

(30) Priority: 03.02.2016 CN 201610077964
(71) Applicant: Alibaba Group Holding Limited, Grand Cayman (KY)
(72) Inventor: YANG, Jirong, Hangzhou Zhejiang 311121 (CN)
(74) Representative: Finnegan Europe LLP
(86) International application number: PCT/CN2017/071831
(87) International publication number: WO 2017/133484

(57) **Abstract**

Provided are a virtual machine deployment method and apparatus. The method comprises: acquiring a fragment node by scrambling and fragmenting to-be-processed data; allocating a target virtual machine to the fragment node according to the data amount of the fragment node; and deploying the fragment node onto the target virtual machine. In the present embodiment, when a virtual machine is allocated to a fragment node, the data amount of the fragment node is controlled firstly by scrambling data, and then a virtual machine matching the data amount is allocated according to the actual data amount so as to prevent the virtual machine from an overload phenomenon, thereby better achieving load balancing.

## Description

This application claims priority to Chinese Patent Application No. 201610077964.5 filed on February 3, 2016 and entitled "Virtual Machine Deployment Method and Apparatus," which is hereby incorporated by reference in its entirety.

### Technical Field

The present invention relates to the technical field of computers, and particularly to a virtual machine deployment method and apparatus.

### Background Art

Nowadays, the Internet is developing rapidly. Cloud computing adopts an innovative computing mode to enable users to gain almost infinite computing capabilities and abundant information services at any time via the Internet. Cloud computing integrates the virtualization technology to increase the resource utilization rate by virtue of scalability and flexibility of the virtualization technology, thus reducing the costs. Specifically, one physical machine has 32 cores in total, and 30 Virtual Machines (VMs) can be allocated. Each VM needs four cores. Theoretically the physical machine needs to have 120 cores in order to create 30 virtual machines, but in fact the physical machine has only 32 cores. In practical applications, all services will not be in a full-load state at the same time. To reduce the costs and increase the resource utilization rate, cores in a low-load state are shared in cloud computing to achieve the purpose of creating 30 virtual machines on one physical machine.

For the above virtualization method, a large amount of data may share one virtual machine, leading to an excessively high load of the virtual machine. For example, in Taobao™ Application, a flagship store usually has much more commodities than an ordinary store and also has a higher search popularity. When the above virtualization method is used, commodity data of a plurality of flagship stores may be deployed onto one virtual machine. When buyers make searches based on merchants, the virtual machine will experience a heavy load.

### Summary of the Invention

The present invention provides a virtual machine deployment method and apparatus to solve the problem of the existing virtualization method that deploying a large amount of data onto one virtual machine will cause a heavy load on the virtual machine.

To achieve the above objectives, the present invention provides a virtual machine deployment method, including:
acquiring a fragment node by scrambling and fragmenting to-be-processed data;
allocating a target virtual machine to the fragment node according to the data amount of the fragment node; and
deploying the fragment node onto the target virtual machine.

To achieve the above objectives, the present invention provides a virtual machine deployment apparatus, including:
a scrambling module, configured to acquire a fragment node by scrambling and fragmenting to-be-processed data;
an allocation module, configured to allocate a target virtual machine to the fragment node according to the data amount of the fragment node; and
a deployment module, configured to deploy the fragment node onto the target virtual machine.

According to the virtual machine deployment method and apparatus of the present invention, a fragment node is acquired by scrambling and fragmenting to-be-processed data, a target virtual machine is allocated to the fragment node according to the data amount of the fragment node, and the fragment node is deployed onto the target virtual machine. In the present embodiment, when a virtual machine is allocated to a fragment node, the data amount of the fragment node is controlled firstly by scrambling data, and then a virtual machine matching the data amount is allocated so as to prevent the virtual machine from an overload phenomenon, thereby better achieving load balancing.

### Brief Description of the Drawings

FIG. 1 is a schematic flowchart of a virtual machine deployment method according to Embodiment 1 of the present invention;
FIG. 2 is a schematic flowchart of a virtual machine deployment method according to Embodiment 2 of the present invention;
FIG. 3 is a schematic diagram of scrambling data using a consistent Hash algorithm provided in Embodiment 2;
FIG. 4 is a schematic diagram of a result of data scrambling provided in Embodiment 2;
FIG. 5 is a first schematic application diagram of the virtual machine deployment method provided in Embodiment 2;
FIG. 6 is a second schematic application diagram of the virtual machine deployment method provided in Embodiment 2;
FIG. 7 is a schematic structural diagram of a virtual machine deployment apparatus according to Embodiment 3 of the present invention; and
FIG. 8 is a schematic structural diagram of a virtual machine deployment apparatus according to Embodiment 4 of the present invention.

### Detailed Description

The virtual machine deployment method and apparatus provided in the embodiments of the present invention are described in detail below with reference to the accompanying drawings.

### Embodiment 1

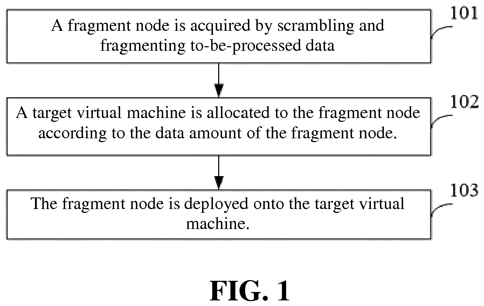

FIG. 1 is a schematic flowchart of a virtual machine deployment method according to Embodiment 1 of the present invention. As shown in FIG. 1, the virtual machine deployment method includes:
Step 101. A fragment node is acquired by scrambling and fragmenting to-be-processed data.

In practical applications, to store data, big data needs to be scrambled and fragmented for distributed storage. As such, each storage device stores a relatively small amount of data, reducing the load of the storage device.

In the present embodiment, the to-be-processed data is scrambled and fragmented according to a preset scrambling algorithm to acquire the fragment node. The fragment node is scrambled fragment data. Specifically, the number of fragments to be obtained after scrambling is firstly set according to the value of the data amount of the to-be-processed data; then, the to-be-processed data is scrambled and fragmented based on the scrambling algorithm.

For example, the to-be-processed data is 2 billion pieces of data and may be scrambled into 256 fragments, that is, 2 billion pieces of data are scrambled into 256 fragment nodes. In a Taobao™ service scenario, commodity data may be scrambled and fragmented using a Hash algorithm, and stored based on fragment nodes acquired after scrambling.

Step 102. A target virtual machine is allocated to the fragment node according to the data amount of the fragment node.

The data amounts of the acquired fragment nodes are different. After the fragment nodes are acquired, the data amount of each fragment node is calculated.

After the data amounts of the fragment nodes are acquired, a target virtual machine is allocated to the fragment node. In the present embodiment, the target virtual machine needs to have a processing capability of processing the data amount included in the fragment node. The processing capability may be represented by at least one of CPU, memory and disk performance parameters.

Step 103. The fragment node is deployed onto the target virtual machine.

After the target virtual machine is selected for the fragment node, the fragment node is deployed onto the target virtual machine.

According to the virtual machine deployment method provided in the present embodiment, a fragment node is acquired by scrambling and fragmenting to-be-processed data, a data amount corresponding to the fragment node is calculated, a target virtual machine is allocated to the fragment node according to the data amount of the fragment node, and the fragment node is deployed onto the target virtual machine. In the present embodiment, when a virtual machine is allocated to a fragment node, the data amount of the fragment node is controlled firstly by scrambling data, and then a virtual machine matching the data amount is allocated so as to prevent the virtual machine from an overload phenomenon, thereby better achieving load balancing.

### Embodiment 2

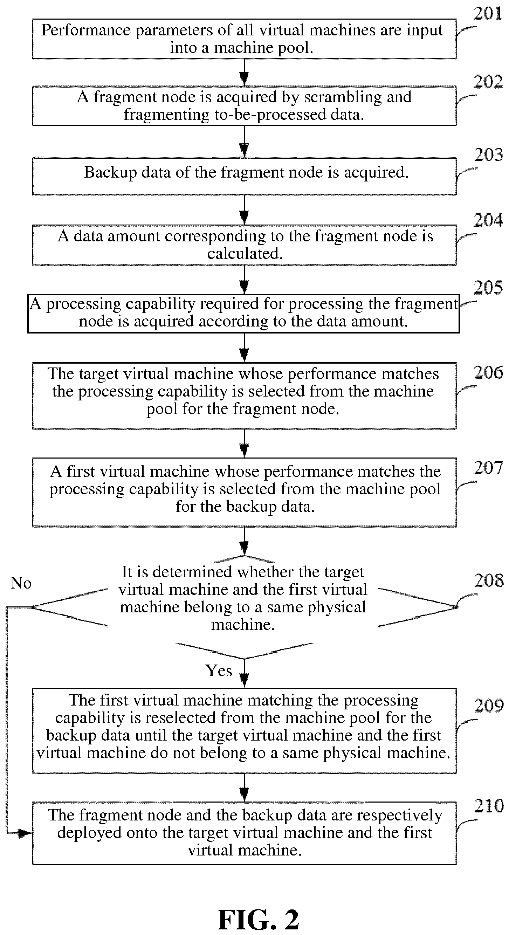

FIG. 2 is a schematic flowchart of a virtual machine deployment method according to Embodiment 2 of the present invention. As shown in FIG. 2, the virtual machine deployment method includes:
Step 201. Performance parameters of all virtual machines are input into a machine pool.

To facilitate virtual machine allocation, the performance parameters of all VMs are input into a machine pool in the present embodiment. The performance parameter of a VM includes a memory size, a disk size, a core quantity and the like of the VM.

Step 202. A fragment node is acquired by scrambling and fragmenting to-be-processed data.

Step 203. Backup data of the fragment node is acquired.

Specifically, the to-be-processed data is scrambled and fragmented using a consistent hash (Hash) algorithm. The number of fragments to be obtained after scrambling is firstly set according to the value of the data amount of the to-be-processed data; then, the to-be-processed data is scrambled and fragmented based on the consistent scrambling algorithm. To ensure data security, the fragment node may be backed up to acquire backup data of the fragment node.

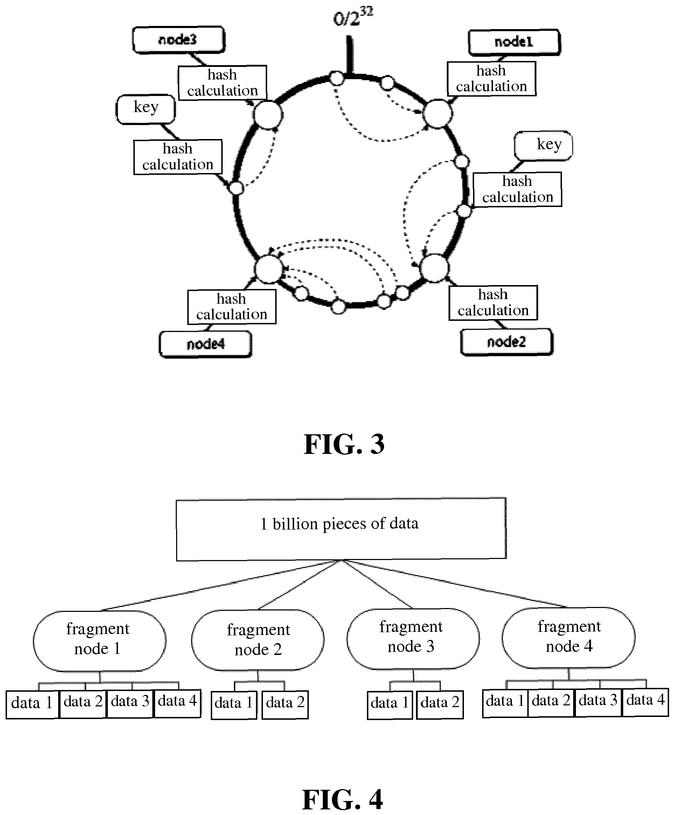

FIG. 3 is a schematic diagram of scrambling data using a consistent Hash algorithm provided in Embodiment 2. The consistent Hash algorithm specifically maps a Value to a 32-bit key, that is, a numerical space of 0 to 2^32-1. This space can be imagined as a ring having its head (0) and tail (2^32-1) connected. Then, the data is mapped to a specific node. For example, key%N, key being the key of the data and N being the number of nodes. In FIG. 3, a large circle on the ring represents one node, a small circle on the ring represents node data, and master data and backup data are set under each node.

For example, there are 1 billion pieces of data needing to be scrambled. The data may be scrambled by using a consistent Hash algorithm to obtain a result shown in FIG. 4. In the figure, 1 billion pieces of data are scrambled into four fragments, each fragment being corresponding to one fragment node. To improve the data security and ensure the service continuity, the data is backed up, multiple pieces of data are set under each fragment node, and the multiple pieces of data under the fragment node have an equal relationship, that is, the multiple pieces of data are master/backup data of each other. For example, a fragment node 1 includes data 1 to data 4, data 1, data 2, data 3 and data 4 being master/backup data of each other. A fragment node 2 includes data 1 to data 2, data 1 and data 2 being master/backup data of each other.

Step 204. A data amount corresponding to the fragment node is calculated.

Specifically, the number of fields included in one piece of data in the fragment node, a field type corresponding to each field, the number of tables included in one piece of data, and the number of entries included in the fragment node are acquired. The number of entries is used for indicating how many pieces of data are included in the fragment node. Further, the number of bits occupied by one piece of data can be calculated according to the number of fields included in one piece of data, the field type corresponding to each field, and the number of tables included in one piece of data. In fact, after a field type is acquired, the number of bits occupied by the field type can be obtained. For example, integer type data int occupies 4 bits (byte); long type data (long) occupies 4 bytes; double type data (double) occupies 8 bytes, a character string (char) occupies 2 bytes, and so on. Further, the data amount of the fragment node is calculated according to the number of entries and the number of bits occupied by one piece of data in the fragment node. Specifically, the data amount of the fragment node is obtained by multiplying the number of entries by the number of bits occupied by one piece of data.

Step 205. A processing capability required for processing the fragment node is acquired according to the data amount.

The processing capability is represented by at least one of CPU, memory and disk performance parameters.

In a search engine application scenario, the data amount of the fragment node is acquired, and the processing capability required for processing the fragment node is acquired according to the data amount. A disk size needed by the fragment node is calculated based on the acquired number of bits occupied by one piece of data and a preset search feature expansion factor and combined index coefficient. After the needed disk size is calculated, a memory size and Central Processing Unit (CPU) performance needed by the fragment node may be acquired according to the disk size.

In practical applications, during index building, a larger number of index levels indicates a longer time required during searching and a higher search difficulty, wh i ch means that the search is expanded. In the present embodiment, a search feature expansion factor is set in advance. The search feature expansion factor may be set according to experience. When a Docvalue search method is adopted, search expansion factors of a disk and memory are respectively set to 1.17 and 0.85. In vsearch, the combined index coefficient is approximately greater than 2.

Step 206. The target virtual machine whose performance matches the processing capability is selected from the machine pool for the fragment node.

Specifically, the target virtual machine whose performance matches the processing capability is selected from the machine pool according to the processing capability required for processing the fragment node. Optionally, the sizes of disk and memory corresponding to the target virtual machine are calculated according to disk and memory in the processing capability required for the fragment node and a preset coefficient. For example, disk and memory in the processing capability are respectively multiplied by the preset coefficient to obtain the sizes of disk and memory of the target virtual machine. For example, the memory size needed by the fragment node = memory of the target virtual machine * 75%, and the disk size needed by the fragment node = disk of the target virtual machine * 75%. In the process of selecting the target virtual machine from the machine pool, the target virtual machine may be preferentially selected gradually from a low-configuration machine pool to a high-configuration machine pool, to achieve an optimal configuration.

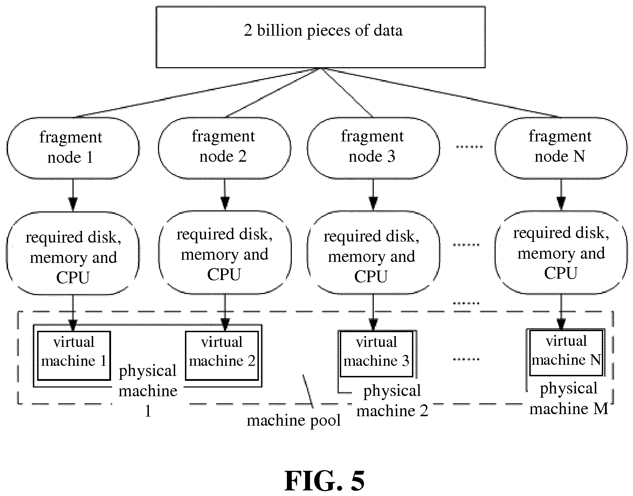

Examples are given below. As shown in FIG. 5, 2 billion pieces of data are scrambled into N fragments, each fragment being corresponding to one fragment node. When the data is not backed up, a data amount corresponding to each fragment node is calculated, and then a processing capability required for processing the fragment node can be obtained according to the acquired data amount. As shown in FIG. 5, the processing capability includes a disk size, a memory size, CPU performance and the like required for processing the fragment node. Then, according to the required processing capability, a target virtual machine matching the fragment node is acquired from the machine pool. In the figure, there are M physical machines, and N virtual machines are created on the M physical machines, where M<N. Physical machine 1 includes virtual machine 1 and virtual machine 2, physical machine 2 includes virtual machine 3, physical machine 3 includes virtual machine 4, ..., and physical machine M includes virtual machine N. Fragment node 1 is deployed on virtual machine 1, fragment node 2 is deployed on virtual machine 2, ..., and fragment node N is deployed on virtual machine N.

Step 207. A first virtual machine whose performance matches the processing capability is selected from the machine pool for the backup data.

In the present embodiment, to improve the data security and ensure the service continuity, the fragment node is backed up, and a virtual machine needs to be allocated to the backup data of the fragment node while the target virtual machine is allocated to the fragment node. Because the backup data and the fragment node include identical data, when a virtual machine is allocated to the backup data, a first virtual machine whose performance matches the processing capability is also selected from the machine pool for the backup data according to the processing capability required for the fragment node, to serve as a virtual machine corresponding to the backup data.

Step 208. It is determined whether the target virtual machine and the first virtual machine belong to a same physical machine.

During virtual machine allocation, if the target virtual machine and the first virtual machine belong to a same physical machine, the data of the fragment node cannot provide services once the physical machine fails. To prevent the master and backup data from being allocated to virtual machines belonging to a same physical machine, in the present embodiment, it is further determined whether the target virtual machine and the first virtual machine belong to a same physical machine after the target virtual machine and the first virtual machine are acquired.

If the determining result is yes, step 209 is performed; otherwise, 210 is performed.

Step 209. The first virtual machine matching the processing capability is reselected from the machine pool for the backup data until the target virtual machine and the first virtual machine do not belong to a same physical machine.

If the target virtual machine and the first virtual machine belong to a same physical machine, in the present embodiment, the first virtual machine is reselected for the backup data until the selected first virtual machine and the target virtual machine do not belong to a same physical machine, so as to ensure that the backup data can continue to provide services after the physical machine to which the target virtual machine belongs fails. After the first virtual machine that belongs to a different physical machine from that of the target virtual machine is acquired, step 210 is performed.

Step 210. The fragment node and the backup data are respectively deployed onto the target virtual machine and the first virtual machine.

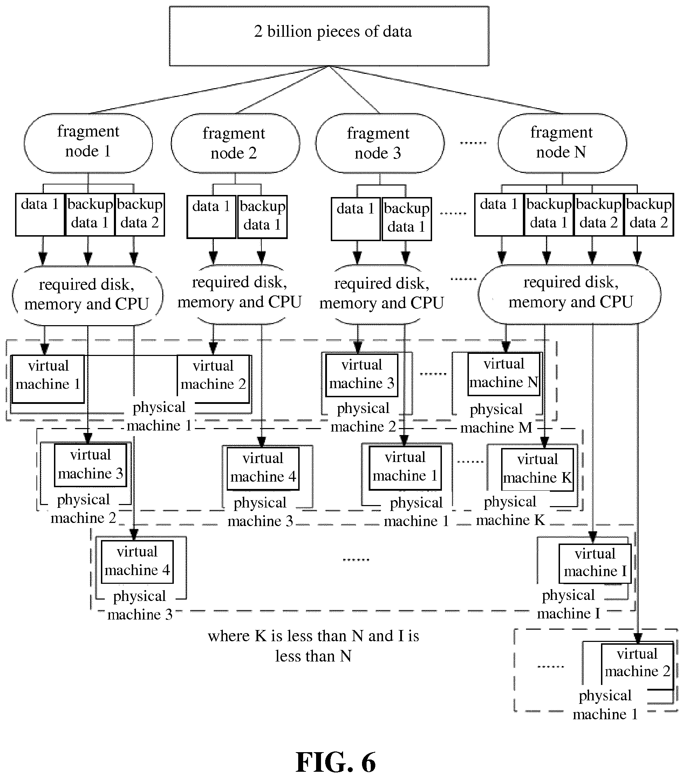

Examples are given below. As shown in FIG. 6, 2 billion pieces of data are scrambled into N fragments, each fragment being corresponding to one fragment node. Each fragment node includes a plurality of pieces of backup data. For example, fragment node 1 includes data 1, backup data 1 and backup data 2, fragment node 2 includes data 1 and backup data 1, fragment node 3 includes data 1 and backup data 1, ..., and fragment node N includes data 1, and backup data 1 to backup data 3. In the figure, there are M physical machines, and N virtual machines are created on the M physical machines, where M<N. Physical machine 1 includes virtual machine 1 and virtual machine 2, physical machine 2 includes virtual machine 3, physical machine 3 includes virtual machine 4, ..., and physical machine M includes virtual machine N.

When virtual machines are deployed for the master data, namely, data 1 to data N, a target virtual machine matching each master data is acquired from the machine pool. Data 1 is deployed onto virtual machine 1, data 2 is deployed onto virtual machine 2, ..., and data N is deployed onto virtual machine N.

When virtual machines are deployed for the backup data, backup data 1 of fragment node 1 is deployed onto virtual machine 3, backup data 1 of fragment node 2 is deployed onto virtual machine 4, backup data 1 of fragment node 3 is deployed onto virtual machine 1, ..., and backup data 1 of fragment node N is deployed onto virtual machine K. K is less than N. Backup data 2 of fragment node 1 is deployed onto virtual machine 4, ..., and backup data 1 of fragment node N is deployed onto virtual machine I, where I is less than N. Backup data 3 of fragment node N is deployed onto virtual machine I, where I is less than N.

In this case, when virtual machines are deployed for the backup data, the backup data cannot be deployed on a virtual machine that belongs to a same physical machine as the target virtual machine does.

In this example, the number of pieces of backup data should not be construed as a limitation to the present invention, and the number of pieces of backup data is not limited herein.

According to the virtual machine deployment method provided in the present embodiment, a fragment node is acquired by scrambling and fragmenting to-be-processed data, a data amount corresponding to the fragment node is calculated, a target virtual machine is allocated to the fragment node according to the data amount of the fragment node, and when the target virtual machine and the first virtual machine do not belong to a same physical machine, respectively deploys the fragment node and the backup data onto the target virtual machine and the first virtual machine. In the present embodiment, when a virtual machine is allocated to a fragment node, the data amount of the fragment node is controlled firstly by scrambling data, and then a virtual machine matching the data amount is allocated so as to prevent the virtual machine from an overload phenomenon, thereby better achieving load balancing.

### Embodiment 3

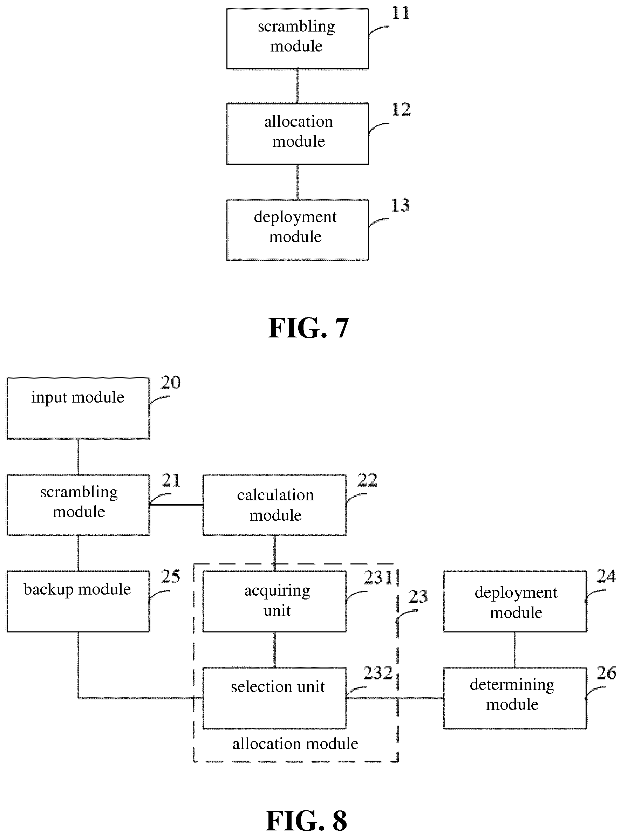

FIG. 7 is a schematic structural diagram of a virtual machine deployment apparatus according to Embodiment 3 of the present invention. As shown in FIG. 7, the virtual machine deployment apparatus includes a scrambling module 11, an allocation module 12 and a deployment module 13.

The scrambling module 11 is configured to acquire a fragment node by scrambling and fragmenting to-be-processed data.

In the present embodiment, the scrambling module 11 scrambles and fragments the to-be-processed data according to a preset scrambling algorithm to acquire the fragment node. The fragment node is scrambled fragment data. Specifically, the scrambling module 11 firstly sets the number of fragments to be obtained after scrambling according to the value of the data amount of the to-be-processed data, and then scrambles and fragments the to-be-processed data based on the scrambling algorithm.

The allocation module 12 is configured to allocate a target virtual machine to the fragment node according to the data amount of the fragment node.

The data amounts of the acquired fragment nodes are different. After the fragment nodes are acquired, the data amount of each fragment node is calculated. After the data amounts of the fragment nodes are acquired, the allocation module 12 allocates a target virtual machine to the fragment node. In the present embodiment, the target virtual machine needs to have a processing capability of processing the data amount included in the fragment node. The processing capability may be represented by at least one of CPU, memory and disk performance parameters.

The deployment module 13 is configured to deploy the fragment node onto the target virtual machine.

The virtual machine deployment apparatus provided in the present embodiment acquires a fragment node by scrambling and fragmenting to-be-processed data, allocates a target virtual machine to the fragment node according to the data amount of the fragment node, and deploys the fragment node onto the target virtual machine. In the present embodiment, when a virtual machine is allocated to a fragment node, the data amount of the fragment node is controlled firstly by scrambling data, and then a virtual machine matching the data amount is allocated so as to prevent the virtual machine from an overload phenomenon, thereby better achieving load balancing.

### Embodiment 4

FIG. 8 is a schematic structural diagram of a virtual machine deployment apparatus according to Embodiment 4 of the present invention. As shown in FIG. 8, the virtual machine deployment apparatus includes an input module 20, a scrambling module 21, a calculation module 22, an allocation module 23, a deployment module 24, a backup module 25 and a determining module 26.

The input module 20 is configured to input performance parameters of all virtual machines into a machine pool before the scrambling module acquires the fragment node by scrambling and fragmenting the to-be-processed data.

Further, the scrambling module 21 is configured to acquire a fragment node by scrambling and fragmenting to-be-processed data.

Further, the calculation module 22 is configured to calculating the data amount corresponding to the fragment node.

The calculation module 22 is specifically configured to acquire the number of entries included in the fragment node, acquire the number of bits occupied by one piece of data in the fragment node, and calculates the data amount according to the number of entries and the number of bits occupied by one piece of data.

Further, the allocation module 23 is configured to allocate a target virtual machine to the fragment node according to the data amount of the fragment node.

The present embodiment provides an optional structure of the allocation module 23, including an acquiring unit 231 and a selection unit 232.

The acquiring unit 231 is configured to acquire, according to the data amount, a processing capability required for processing the fragment node. The processing capability is represented by at least one of CPU, memory and disk performance parameters.

The acquiring unit 231 is specifically configured to acquire the processing capability required for the fragment node through calculation according to a preset search feature expansion factor, a combined search factor and the data amount. The search feature expansion factor, the combined search factor, and the data amount are multiplied to obtain a disk size required for processing the fragment node, and a corresponding memory and CPU are selected according to the disk size.

The selection unit 232 is configured to select, for the fragment node, the target virtual machine whose performance matches the processing capability from a machine pool.

Further, the selection unit 232 is specifically configured to preferentially select the target virtual machine gradually from a low-configuration machine pool to a high-configuration machine pool, to achieve an optimal configuration.

Further, the deployment module 24 is configured to deploy the fragment node onto the target virtual machine.

Further, the backup module 25 is configured to acquire backup data of the fragment node before the calculation module 22 calculates the data amount corresponding to the fragment node.

Further, the allocation module 23 is further configured to: before the deployment module 24 deploys the fragment node onto the target virtual machine, select, for the backup data, a first virtual machine whose performance matches the processing capability from the machine pool.

Further, the determining module 26 is configured to determine whether the target virtual machine and the first virtual machine belong to a same physical machine.

Further, the allocation module 23 is further configured to: when the determining module 26 determines that the target virtual machine and the first virtual machine belong to a same physical machine, reselect, for the backup data, the first virtual machine matching the processing capability from the machine pool until the target virtual machine and the first virtual machine do not belong to a same physical machine.

Further, the deployment module 24 is further configured to deploy the backup data onto the first virtual machine when the determining module determines that the target virtual machine and the first virtual machine do not belong to a same physical machine.

The virtual machine deployment apparatus provided in the present embodiment acquires a fragment node by scrambling and fragmenting to-be-processed data, calculates a data amount corresponding to the fragment node, allocates a target virtual machine to the fragment node according to the data amount of the fragment node, backs up the fragment node, allocates a first virtual machine to the backup data, and when the target virtual machine and the first virtual machine do not belong to a same physical machine, respectively deploys the fragment node and the backup data onto the target virtual machine and the first virtual machine. In the present embodiment, when a virtual machine is allocated to a fragment node, the data amount of the fragment node is controlled firstly by scrambling data, and then a virtual machine matching the data amount is allocated so as to prevent the virtual machine from an overload phenomenon, thereby better achieving load balancing.

Those of ordinary skill in the art may understand that all or some of the steps in the above method embodiments can be accomplished by a program instructing relevant hardware. The program may be stored in a computer-readable storage medium. When the program is run, the steps in the method embodiments are performed. The storage medium includes various mediums that can store data, such as a ROM, a RAM, a magnetic disk, or an optical disc.

Finally, it should be noted that the above embodiments are merely used for illustrating the technical solutions of the present invention and are not intended to limit the present invention. Although the present invention is described in detail with reference to the above embodiments, those of ordinary skill in the art should understand that they can modify the technical solutions set forth in the above embodiments or make equivalent replacements to some or all of the technical feature. Such modifications or replacements do not cause the essence of the corresponding technical solution to depart from the scope of the technical solutions of the embodiments of the present invention.

## Claims

1. A virtual machine deployment method, comprising:
acquiring a fragment node by scrambling and fragmenting to-be-processed data;
allocating a target virtual machine to the fragment node according to the data amount of the fragment node; and
deploying the fragment node onto the target virtual machine.

2. The virtual machine deployment method according to claim 1, wherein the allocating a virtual machine to the fragment node according to the data amount of the fragment node comprises:
acquiring, according to the data amount, a processing capability required for processing the fragment node, wherein the processing capability is represented by at least one of CPU, memory and disk performance parameters; and
selecting, for the fragment node, the target virtual machine whose performance matches the processing capability from a machine pool.

3. The virtual machine deployment method according to claim 2, wherein the selecting, for the fragment node, the target virtual machine whose performance matches the processing capability from a machine pool comprises:
preferentially selecting the target virtual machine gradually from a low-configuration machine pool to a high-configuration machine pool, to achieve an optimal configuration.

4. The virtual machine deployment method according to claim 3, wherein before the calculating the data amount corresponding to the fragment node, the method further comprises:
acquiring backup data of the fragment node.

5. The virtual machine deployment method according to claim 4, wherein before the storing the fragment node onto the target virtual machine, the method further comprises:
selecting, for the backup data, a first virtual machine whose performance matches the processing capability from the machine pool;
determining whether the target virtual machine and the first virtual machine belong to a same physical machine;
if the determining result is yes, reselecting, for the backup data, the first virtual machine matching the processing capability from the machine pool until the target virtual machine and the first virtual machine do not belong to a same physical machine; and
if the determining result is no, deploying the backup data onto the first virtual machine.

6. The virtual machine deployment method according to claim 5, wherein before the allocating a target virtual machine to the fragment node according to the data amount of the fragment node, the method further comprises:
calculating the data amount corresponding to the fragment node.

7. The virtual machine deployment method according to claim 6, wherein the calculating the data amount corresponding to the fragment node comprises:
acquiring the number of entries comprised in the fragment node;
acquiring the number of bits occupied by one piece of data in the fragment node; and
calculating the data amount according to the number of entries and the number of bits occupied by one piece of data.

8. The virtual machine deployment method according to claim 7, wherein the acquiring, according to the data amount, a processing capability required for processing the fragment node comprises:
acquiring the processing capability through calculation according to a preset search feature expansion factor, a combined search factor and the data amount.

9. The virtual machine deployment method according to any one of claims 1-8, wherein before the acquiring a fragment node by scrambling and fragmenting to-be-processed data, the method further comprises:
inputting performance parameters of all virtual machines into a machine pool.

10. A virtual machine deployment apparatus, comprising:
a scrambling module, configured to acquire a fragment node by scrambling and fragmenting to-be-processed data;
an allocation module, configured to allocate a target virtual machine to the fragment node according to the data amount of the fragment node; and
a deployment module, configured to deploy the fragment node onto the target virtual machine.

11. The virtual machine deployment apparatus according to claim 10, wherein the allocation module comprises an acquiring unit and a selection unit;
the acquiring unit is configured to acquire, according to the data amount, a processing capability required for processing the fragment node, wherein the processing capability is represented by at least one of CPU, memory and disk performance parameters; and
the selection unit is configured to select, for the fragment node, the target virtual machine whose performance matches the processing capability from a machine pool.

12. The virtual machine deployment apparatus according to claim 11, wherein the selection unit is specifically configured to preferentially select the target virtual machine gradually from a low-configuration machine pool to a high-configuration machine pool, to achieve an optimal configuration.

13. The virtual machine deployment apparatus according to claim 12, further comprising: a backup module is configured to acquire backup data of the fragment node before the calculation module calculates the data amount corresponding to the fragment node.

14. The virtual machine deployment apparatus according to claim 13, further comprising: a determining module;
the allocation module is further configured to: before the deployment module deploys the fragment node onto the target virtual machine, select, for the backup data, a first virtual machine whose performance matches the processing capability from the machine pool; and when the determining module determines that the target virtual machine and the first virtual machine belong to a same physical machine, reselect, for the backup data, the first virtual machine matching the processing capability from the machine pool until the target virtual machine and the first virtual machine do not belong to a same physical machine;
the determining module is configured to determine whether the target virtual machine and the first virtual machine belong to a same physical machine;
the deployment module is further configured to deploy the backup data onto the first virtual machine when the determining module determines that the target virtual machine and the first virtual machine do not belong to a same physical machine.

15. The virtual machine deployment apparatus according to claim 14, further comprising: a calculation module is configured to calculating the data amount corresponding to the fragment node.

16. The virtual machine deployment apparatus according to claim 15, wherein the calculation module is specifically configured to acquire the number of entries comprised in the fragment node, acquire the number of bits occupied by one piece of data in the fragment node; and calculate the data amount according to the number of entries and the number of bits occupied by one piece of data.

17. The virtual machine deployment apparatus according to claim 16, wherein the acquiring unit is specifically configured to acquire the processing capability through calculation according to a preset search feature expansion factor, a combined search factor and the data amount.

18. The virtual machine deployment apparatus according to any one of claims 10-17, further comprising:
an input module, configured to input performance parameters of all virtual machines into a machine pool before the scrambling module acquires the fragment node by scrambling and fragmenting the to-be-processed data.
